# EUROPEAN PATENT SPECIFICATION

(11) **EP 3 497 177 B1**
(45) Date of publication and mention of the grant of the patent: **17.01.2024**
(21) Application number: 16912346.0
(22) Date of filing: 12.08.2016
(51) Int. Cl.: C09J 191/00, C09J 4/00, C09J 4/02, C09J 133/08, C08L 91/00

(54) **METHOD FOR MAKING WATER-BASED PRESSURE SENSITIVE ADHESIVE COMPOSITIONS**
VERFAHREN ZUR HERSTELLUNG VON WÄSSRIGEN HAFTKLEBSTOFFZUSAMMENSETZUNGEN
PROCÉDÉ DE PRODUCTION DE COMPOSITIONS ADHÉSIVES AQUEUSES SENSIBLES À LA PRESSION

(43) Date of publication of application: 19.06.2019
(73) Proprietor: Dow Global Technologies LLC, Midland, MI 48674 (US); Rohm and Haas Company, Philadelphia, PA 19106 (US)
(72) Inventor: ZHANG, Jiguang, Shanghai 201318 (CN); YANG, Miao, Shanghai 201210 (CN); FENG, Shaoguang, Shanghai 200120 (CN); QU, Zhaohui, Shanghai 200120 (CN)
(74) Representative: Boult Wade Tennant LLP
(86) International application number: PCT/CN2016/094830
(87) International publication number: WO 2018/027891

(56) References cited:
- WO-A2-2006/063266
- CN-A- 1 133 214
- CN-A- 1 847 269
- CN-A- 102 732 200
- JP-A- S61 101 513
- JP-B2- 4 147 476
- KR-A- 20150 140 984
- US-A- 2 889 236
- US-A- 3 547 847
- US-A- 5 559 192
- US-B2- 7 566 759
- ZBIGNIEW CZECH ET AL: "UV-crosslinkable acrylic pressure-sensitive adhesives for industrial application", POLYMER BULLETIN, SPRINGER, BERLIN, DE, vol. 69, no. 1, 4 March 2012 (2012-03-04), pages 71-80, XP035056880, ISSN: 1436-2449, DOI: 10.1007/S00289-012-0725-Y
- PU, G ET AL.: 'Polyacrylates with High Biomass Contents for Pressure-Sensitive Adhesives Prepared via Mini-emulsion Polymerization' INDUSTRIAL & ENGINEERING CHEMISTRY RESEARCH vol. 51, no. 37, 19 September 2012, pages 12145 - 12149, XP055463438
- OYMAN Z O ET AL: "Oxidation of drying oils containing non-conjugated and conjugated double bonds catalyzed by a cobalt catalyst", PROGRESS IN ORGANIC COATINGS, ELSEVIER BV, NL, vol. 54, no. 3, 1 November 2005 (2005-11-01), pages 198-204, XP027868915, ISSN: 0300-9440 [retrieved on 2005-11-01]
- JUITA ET AL: "Roles of peroxides and unsaturation in spontaneous heating of linseed oil", FIRE SAFETY JOURNAL, ELSEVIER, AMSTERDAM, NL, vol. 61, 6 September 2013 (2013-09-06), pages 108-115, XP028744978, ISSN: 0379-7112, DOI: 10.1016/J.FIRESAF.2013.07.005

## Description

### Field of the Disclosure

The instant disclosure relates to methods for making pressure sensitive adhesive compositions. More particularly, the disclosure relates to methods for making water-based pressure sensitive adhesive compositions with improved cohesion.

### Background and Summary of the Disclosure

Adhesive compositions are useful for a wide variety of purposes. One particularly useful subset of adhesive compositions is water-based pressure sensitive adhesives. The use of water-based pressure sensitive adhesives in different end-use applications is generally known. For instance, water-based pressure sensitive adhesives can be used with labels, notepads, tapes, decals, bandages, decorative and protective sheets, and a wide variety of other products.

As used in the art, the term "pressure sensitive adhesive" designates a material comprising one or more polymer compositions which, when dried, is aggressively and permanently tacky at room temperature. Further, the term "water-based" indicates that the pressure sensitive adhesive is manufactured with an aqueous carrier. A typical water-based pressure sensitive adhesive will firmly adhere to a variety of dissimilar surfaces upon mere contact without the need of more than finger or hand-applied pressure.

Two properties recognized by the pressure sensitive adhesives industry are the adhesion (*i.e.,* tack or peel strength to a surface) and the cohesion (*i.e*., resistance to shear) of these polymer compositions. Attempts to improve the cohesion of pressure sensitive adhesives, such as by using hard monomers with high glass transition temperatures or by using crosslinker during polymerization, tend to reduce the adhesion of the pressure sensitive adhesives significantly. The adhesion and cohesion of water-based pressure sensitive adhesives are particularly important when the adhesive is to be used on a low energy surface, such as a polyolefin film.

Therefore, methods for making water-based pressure sensitive adhesive compositions with improved cohesion, without sacrificing adhesion, are desirable.

US 5559192 A relates to air curing polymer compositions.

The invention provides a method for making a water-based adhesive composition in accordance with the appended claims. The method comprises dispersing at least one unsaturated monomer and at least one surfactant in an aqueous medium to form an emulsified mixture. The method further comprises introducing at least one initiator to the emulsified mixture, thereby polymerizing the at least one unsaturated monomer and forming an emulsion polymer. The method still further comprises introducing at least one polyol ester of a conjugated acid to the emulsion polymer after polymerizing the at least one unsaturated monomer.

The conjugated acid comprises a an aliphatic carboxylic acid comprising at least three conjugated carbon-carbon double bonds. The conjugated acid is derived from tung oil. The polyol is an alcohol with multiple hydroxyl groups, suitable polyols include glycerin, pentaerythritol and erythritol. A pressure sensitive adhesive comprising the adhesive composition prepared according to the disclosed method is also disclosed.

Adhesive compositions formed according to the disclosed methods may further include, optionally, one or more thickeners, one or more defoamers, one or more wetting agents, one or more mechanical stabilizers, one or more pigments, one or more fillers, one or more freeze-thaw agents, one or more neutralizing agents, one or more plasticizers, one or more tackifiers, one or more adhesion promoters, and combinations of two or more thereof.

### Detailed Description of the Disclosure

The instant disclosure relates to methods for forming water-based pressure sensitive adhesive compositions with improved cohesion, without sacrificing adhesion.
At least one unsaturated monomer is dispersed throughout an aqueous medium together with a surfactant, thereby forming an emulsified mixture. The surfactant acts as an emulsifier and enables droplets of the at least one unsaturated monomer, which is hydrophobic, to form throughout the aqueous medium.

An initiator is then introduced into the emulsified mixture. The initiator is configured to react with the at least one unsaturated monomer, thereby forming an emulsion polymer comprising unsaturated monomer subunits. The initiator reacts with the at least one unsaturated monomer dispersed throughout the aqueous medium until all or substantially all of the at least one unsaturated monomer is polymerized. The end result is a dispersion of polymer particles in the aqueous medium, the polymer particles comprising the at least one unsaturated monomer subunits. This dispersion is commonly referred to as an emulsion polymer.

Additional oxidation-reduction initiator is introduced to the emulsion polymer after all of the at least one unsaturated monomer is fed to the emulsified polymer, in order to reduce monomer residue level, "often called redox chasing." Additional oxidation-reduction initiator is further introduced to the emulsion polymer after all of the polyol ester is fed to the emulsified mixture.

The reduction-oxidation (redox) initiator system consists of at least one, inorganic reducing agent and of an inorganic or organic oxidizing agent. The oxidation component comprises ammonium salts and alkali metal salts of peroxodisulfuric acid, e.g. sodium peroxodisulfate, hydrogen peroxide or organic peroxides, e.g. tert-butyl hydroperoxide. The reduction component comprises alkali metal salts of sulfurous acid, such as sodium sulfite, sodium hydrogen sulfite, alkali metal salts of disulfurous acid, such as sodium disulfite, bisulfite addition compounds with aliphatic aldehydes and ketones, such as acetone bisulfite, or reducing agents such as hydroxymethanesulfinic acid and its salts, or ascorbic acid. The redox initiator systems can be used along with soluble metal compounds whose metallic component is able to exist in a plurality of valency states.

Examples of common redox initiator systems are tert-butyl hydroperoxide/sodium bisulfite, ascorbic acid/iron(II) sulfate/sodium peroxodisulfate, and tert-butyl hydroperoxide/Na hydroxymethanesulfinate. The individual components, for example the reduction component, may also be mixtures, for example a mixture of the sodium salt of hydroxymethanesulfinic acid with sodium disulfite.

The above-mentioned compounds are mostly employed in the form of aqueous solutions, the lower concentration being determined by the amount of water which is acceptable in the dispersion and the upper concentration by the solubility of the relevant compound in water. In general the concentration is from 0.1 to 30% by weight, preferably from 0.5 to 20% by weight, particularly preferably from 1.0 to 10% by weight, based on the solution.

The amount of initiators is generally from 0.1 to 15% by weight, preferably from 0.5 to 10% by weight, based on the monomers that are to be polymerized. It is also possible to use a plurality of different initiators in the course of the emulsion polymerization.

According to the present disclosure, it is surprisingly found that introducing a polyol ester of a conjugated acid to the emulsion polymer, after polymerization is completed, enhances the cohesion of the resulting adhesive composition. In particular, the polyol ester is added after all of the at least one unsaturated monomer is introduced to the aqueous medium. As will be discussed in greater detail below, addition of a polyol ester of a conjugated acid derived from tung oil to the emulsion polymer after polymerization is completed, from 0.1 to 5 weight percent based on the dry weight of the emulsion polymer, is particularly useful in increasing shear resistance.

As described, but not within the scope of the invention, the polyol ester of a conjugated acid is added to the emulsion polymer immediately after the redox chasing step together with an oxidation-reduction initiator. The emulsion is allowed to cool to room temperature before further processing after the polyol ester is introduced. In some embodiments, the emulsion polymer is allowed to cool to room temperature and then is reheated before introducing the polyol ester of the conjugated acid to the emulsion polymer, together with oxidation-reduction initiator. The emulsion is allowed to cool to room temperature before further processing after the polyol ester is introduced. In some embodiments, the polyol ester of the at least one conjugated acid is cold blended with the emulsion polymer without using any oxidation-reduction initiator. As will be discussed in further detail below and illustrated by way of examples, introduction of the polyol ester to the emulsion polymer, after polymerization has completed, results in a composition that, when applied in a pressure sensitive adhesive application, provides enhanced cohesion while maintaining adhesion, relative to traditional pressure sensitive adhesive formulations.

As discussed above, at least one unsaturated monomer is dispersed within an aqueous medium and polymerized, forming polymers and/or interpolymers. Non-limiting examples of the at least one unsaturated monomer, include, but are not limited to, acrylates such as butyl acrylate, ethylhexyl acrylate, ethyl acrylate, methyl acrylate, octyl acrylate, isooctyl acrylate, decyl acrylate, isodecyl acrylate, lauryl acrylate, cyclohexyl acrylate; methacrylates such as methyl methacrylate, isobutyl methacrylate, octyl methacrylate, isooctyl methacrylate, decyl methacrylate, isodecyl methacrylate, lauryl methacrylate, pentadecyl methacrylate, stearyl methacrylate, , C₁₂ to C₁₈ alkyl methacrylates, cyclohexyl methacrylate; styrene, vinyl ester, dioctyl maleate, and combinations thereof. The at least one unsaturated monomer is present in the final adhesive composition from 30 to 70 weight percent, based upon the total weight of the adhesive composition. All subranges from 30 to 70 are included herein and disclosed herein. For example, the range can be from a lower limit of 30, 35, 40 or 45 weight percent to an upper limit of 63, 65, or 70.

As discussed above, a surfactant may optionally be introduced into the aqueous medium for stabilizing the at least one unsaturated monomer and, after polymerization, the emulsion polymer dispersed throughout the aqueous medium. Non-limiting examples of the at least one surfactant include, but are not limited to, cationic surfactants, anionic surfactants, zwitterionic surfactants, non-ionic surfactants, and combinations thereof. Examples of anionic surfactants include, but are not limited to, sulfonates, carboxylates, and phosphates. Examples of cationic surfactants include, but are not limited to, quaternary amines. Examples of non-ionic surfactants include, but are not limited to, block copolymers containing ethylene oxide and silicone surfactants, such as ethoxylated alcohol, ethoxylated fatty acid, sorbitan derivative, lanolin derivative, ethoxylated nonyl phenol, or alkoxylated polysiloxane. The at least one surfactant is present in the emulsified mixture from 0.01 to 10 dry weight percent based on total dry weight of monomer. All subranges from 0.01 to 10 are included herein and disclosed herein. For example, the range can be from a lower limit of 0.01, 0.05, 0.1, or 0.2 to an upper limit of 0.5, 1, 5, or 10.

As discussed above, at least one polyol ester of a conjugated acid is introduced to the emulsion polymer. The conjugated acid includes unsaturated fatty acids containing at least three conjugated carbon-carbon double bonds. The unsaturated fatty acids include fatty acids derivable from tung oil and/or tung oil fatty acid derived from tung oil. In particular, tung oil fatty acid comprises α-eleostearic acid, linoleic acid, palmitic acid, and oleic acid, polyol esters of which are suitable for the purposes of this invention. In particular, glycerol ester of a conjugated acid comprising α-eleostearic acid is particularly suitable.

Tung oil generally has the illustrative structure according to (I):

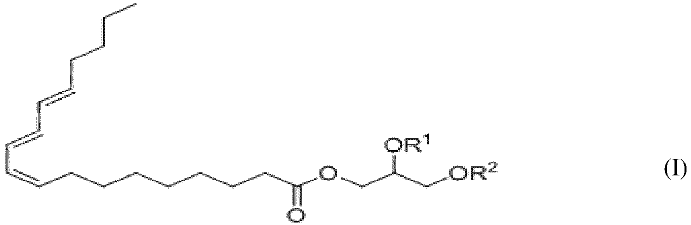

Examples of the conjugated acid further include, but are not limited to, aliphatic acids, in particular aliphatic carboxylic acids comprising three or more conjugated carbon-carbon double bonds.

The polyol ester of the conjugated acid is present in the emulsified mixture from 0.01 to 5 weight percent, or from 0.2 to 2 weight percent. All individual ratio values and subranges from 0.01 to 5 are included herein and disclosed herein. For example, the ratio can be from a lower limit of 0.01, 0.05, 0.10, or 0.20 to an upper limit of 1, 2, 3, 4, or 5.

In some embodiments, more than one initiator may be introduced into the emulsified mixture for polymerizing the at least one unsaturated monomer. The at least one initiator can be either a thermal initiator or a redox system initiator. One example of the at least one thermal initiator includes, but is not limited to, ammonium persulfate. Where the initiator is a redox system initiator, the reducing agent can be, for example, an ascorbic acid, a sulfoxylate, or an erythorbic acid, while the oxidating agent can be, for example, a peroxide or a persulfate. The at least one initiator is present in the emulsified mixture from 0.05 to 2 weight percent. All subranges from 0.05 to 2 are included herein and disclosed herein. For example, the range can be from a lower limit of 0.05, 0.07, 0.09, or 0.1 to an upper limit of 0.8, 1, 1.3, 1.8, or 2.

The pressure sensitive adhesive compositions formed according to the disclosed methods may further include, optionally, one or more additives. Examples of the one or more additives include, but are not limited to, at least one thickener, at least one defoamer, at least one wetting agent, at least one mechanical stabilizer, at least one pigment, at least one filler, at least one freeze-thaw agent, at least one neutralizing agent, at least one plasticizer, at least one tackifier, at least one adhesion promoter, and/or combinations thereof.

The water-based pressure sensitive adhesive composition compositions formed according to the disclosed methods may comprise 0 to 5 percent by weight of at least one thickener. All individual values and subranges from 0 to 5 weight percent are included herein and disclosed herein. For example, the weight percent of the at least one thickener can be from a lower limit of 0, 0.1 0.2, 0.3, or 0.5 weight percent to an upper limit of 1, 2, 3, 4, or 5 weight percent. Example thickeners include, but are not limited to, ACRYSOL^{™}, UCAR^{™} and CELOSIZE^{™} which are commercially available from The Dow Chemical Company, Midland, Michigan.

The water-based pressure sensitive adhesive composition compositions formed according to the disclosed methods may comprise 0 to 2 percent by weight at least one neutralizing agent. All individual values and subranges from 0 to 2 weight percent are included herein and disclosed herein. For example, the weight percent of the at least one neutralizing agent can be from a lower limit of 0, 0.2, 0.3, or 0.5 weight percent to an upper limit of 0.5, 1, 1.5, or 2 weight percent. Neutralizing agents are typically used to control pH to provide stability to the formulated pressure sensitive adhesive composition. Examples of the at least one neutralizing agent include, but are not limited to, aqueous ammonia, aqueous amines, and other aqueous inorganic salts.

The water-based pressure sensitive adhesive composition compositions formed according to the disclosed methods may comprise less than 50 percent by weight at least one tackifier. All individual values and subranges from less than 50 weight percent are included herein and disclosed herein. For example, the weight percent of the at least one tackifier can be from a lower limit of 0, 0.1, 0.2, 0.3, 0.5, 1, 2, 3, 4, or 5 weight percent to an upper limit of 10, 20, 30, 40, or 50 weight percent. Examples of the at least one tackifier include, but are not limited to, rosin resins including rosin acid and/or rosin ester obtained by esterifying rosin acid with alcohols or an epoxy compound and/or its mixture, non-hydrogenated aliphatic C₅ resins, hydrogenated aliphatic C₅ resins, aromatic modified C₅ resins, terpene resins, hydrogenated C₉ resins, and combinations thereof.

The water-based pressure sensitive adhesive composition compositions formed according to the disclosed methods may comprise less than 5 percent by weight of at least one adhesion promoters. All individual values and subranges from less than 5 weight percent are included herein and disclosed herein. For example, the weight percent of the at least one adhesion promoter can be from a lower limit of 0, 0.1, 0.2, 0.3, 0.5, 1, 2, 3, or 4 weight percent to an upper limit of 0.1, 0.2, 0.3, 0.5, 1, 2, 3, 4, 5 weight percent.

### Examples of the Disclosure

The present disclosure will now be explained in further detail by discussing Illustrative Examples and Comparative Examples. However, the scope of the present disclosure is not, of course, limited to these Illustrative Examples.

### Emulsion Polymerization Procedure

In general, the emulsion mixture according to the disclosure is prepared as follows. A four liter, five-neck reactor equipped with a condenser, a mechanical stirrer, a temperature-controlled thermal couple and inlets for initiators and monomers, is fed with 675 g of deionized ("DI") water and heated to 88°C under a gentle N₂ flow. In a separate container, a monomer emulsion ("ME") is prepared by mixing 275 g of DI water, 10 g of a sodium dodecylbenzene sulfonates surfactant, such as RHODACAL^{™} DS-4 from Solvay S.A., Brussels, Belgium ("DS-4"), 11.9 g of a fatty alcohol ethersulfates surfactant, such as DISPONIL^{™} FES77 surfactant ("FES-77) from BASF SE, Ludwigshafen, Germany, 2.5 g of Na₂CO₃, and 1,672 g of a monomer mixture comprising 2-ethylhexyl acrylate ("2-EHA"), butyl acrylate ("BA"), ethyl acrylate ("EA"), methyl methacrylate ("MMA"), and acrylic acid ("AA").

Next, a solution of a mixture of Na₂CO₃ and ammonium persfulate ("APS") in 40 g DI water is added into the reactor. Immediately after addition of the solution of Na₂CO₃ and APS, the monomer emulsion is fed into the reactor. The feeding proceeds for 80 minutes. Upon completion of the monomer emulsion addition, the reaction mixture is cooled to 60°C before gradual addition of a solution of tert-butyl hydroperoxide (70%) ("t-BHP") (9.2 g in 32 g DI water) and 6. 8 g of a reducing agent, such as BRUGGOLITE^{™} FF6 M from Brüggemann Chemical US Company, Chadds Ford, Pennsylvania ("FF6"), in 34.5 g DI water, via two separate pipes over 30 minutes. Upon completion of the feeds, the reaction is cooled to room temperature. Tung oil, commercial available from Anhui Refined Oil and Fatty Co., Ltd, China, can be added to the emulsion polymer in a variety of ways after polymerization has completed, as demonstrated in the Examples below. The obtained composition is then filtered through 325 mesh filter cloth to prepare the composition for subsequent evaluation work.

### Pressure Sensitive Adhesive Formulation

All samples are lightly formulated with a wetting agent, such as 0.5% (wet/wet) AEROSOL^{™} GPG wetting agent obtained from Cytec, Woodland Park, New Jersey ("GPG"), based on total emulsion, to improve wet-out for lab drawdowns unless otherwise specified. The viscosity is then adjusted to about 600 cps (Brookfield, RVDV, 30 rpm, 63#) using a thickener, such as ACRYSOL^{™} RM-2020 from The Dow Chemical Company, Midland, Michigan ("RM-2020"), and final pH is adjusted to 7.0 to 7.5 using ammonia.

### Lab Drawdowns

A polyethylene ("PE") film is pre-treated by corona treatment before lamination. The formulated adhesive is coated to a release liner in an amount of 18 g/m² on dry weight basis and dried at 80°C for 6 minutes. The PE film is laminated with the pressure sensitive adhesive coated release liner in such a manner that the adhesive layer is in contact with the corona treated side of PE film to give an adhesive laminate.

### Application Tests

Performance testing can be conducted after the adhesive laminate is conditioned in a controlled environment (22-24°C, 50-60% relative humidity) testing laboratory for at least overnight.

Adhesion/Tack Test: Samples are tested on both stainless steel ("SS") and high density polyethylene ("HDPE") test plates according to Féderation Internationale des fabricants et transformateurs d' Adhésifs et Thermocollants ("FINAT") Test Method No. 9.

Adhesion/Peel Test: Samples are tested on high density polyethylene ("HDPE") test plates according to FINAT Test Method No. 2.

Cohesion/Shear Test: FINAT Test Method No. 8 is used for the shear resistance test.

Failure mode is recorded behind the value of the tests: "A" indicates adhesion failure and "C" indicates cohesion failure. Illustrative Examples ("IE") and Comparative Examples ("CE") are detailed in Tables 1 and 2 below. Table 1 details the compositions of the relevant components of the Examples.

**Table 1: Example Compositions**

| | Parts by Weight in Monomer Emulsion | | | | |
|---|---|---|---|---|---|
| Raw Material | CE1 | IE1 | CE2 | CE3 | IE3 |
| 2-Ethylhexyl Acrylate | 47 | 47 | 71.5 | 71.5 | 71.5 |
| Ethyl Acrylate | 46.4 | 46.4 | 18.5 | 18.5 | 18.5 |
| Dioctyl Maleate | 1.8 | 1.8 | | | |
| Styrene | 1.8 | 1.8 | | | |
| Methyl Methacrylate | 0.7 | 0.7 | 9 | 9 | 9 |
| Acrylic Acid | 2.3 | 2.3 | 1 | 1 | 1 |
| Tung Oil | | 1 | | 1 | 1 |
| Redox Chasing | No | Yes | No | No | Yes |
| Total | 100 | 101 | 100 | 101 | 101 |

For IE1, an emulsion polymer is formed with the composition disclosed in Table 1 and as discussed above. The emulsion polymer is allowed to cool to room temperature and then is reheated to 60°C. Tung oil, is added to the emulsion polymer followed by adding a solution of 1.2g tert-butyl hydroperoxide (70%) ("t-BHP") in 32g DI water and a solution of 0.5 g of BRUGGOLITE^{™} FF6 M in 34.5 g DI water, via two separate pipes over 30 minutes. The emulsion is allowed to cool to room temperature before further processing after the tung oil is introduced.

For CE3, an emulsion polymer is formed with the composition disclosed in Table 1 and as discussed above. Tung oil is cold blended with the emulsion polymer without any additional oxidation-reduction imitator.

For IE3, an emulsion polymer is formed with the composition disclosed in Table 1 and as discussed above. Immediately after the oxidation-reduction chasing step and before cooling, Tung oil is added to the emulsion polymer followed by adding a solution of 1.2g tert-butyl hydroperoxide (70%) ("t-BHP") in 32g DI water and a solution of 0.5 g of BRUGGOLITE^{™} FF6 M in 34.5 g DI water, via two separate pipes over 30 minutes. The emulsion is allowed to cool to room temperature before further processing after the tung oil is introduced.

**Table 2: Adhesion and Cohesion Performance Results**

| | CE1 | IE1 | CE2 | CE3 | IE3 |
|---|---|---|---|---|---|
| Initial Tack[2], HDPE, N/in² | 2.8A | 2.6A | 4.2A | 4.3A | 4A |
| Shear Resistance, SS, 1"x1"x1kg, DT=1min, hrs | 145C | >500 | 69C | 61A, >500 | >500 |
| HDPE peel, 90°C 20min, N/in | 4.2A | 4.0A | 5.4A | 5.3A | 6.1A |
| HDPE peel, 90°C 1day, N/in | 6.7A | 6.5A | 5.9A | 6.1A | 7.2A |

As discussed above, in the performance of water-based pressure sensitive adhesive applications, the adhesion (*i.e.,* tack and peel) and the cohesion (*i.e.,* resistance to shear) of the pressure sensitive adhesive are two key properties. In existing pressure sensitive adhesive formulations, glass transition temperature (Tg) and molecular weight are commonly used to increase shear performance, while sacrificing tack performance. By improving shear according to traditional techniques, tack performance will be dramatically decreased. According to the present disclosure, it is surprisingly found that the inclusion of a polyol ester of a conjugated acid, such as tung oil in the Illustrative Examples, helps to improve shear resistance effectively with less tack performance decrease and comparable or increased peel

As can be seen in Table 2, the incorporation of tung oil into the adhesive composition brought significant increase in shear resistance. The Inventive Examples show at least a threefold increase in shear resistance compared to the Comparative Examples. Meanwhile, the tack performances are not significantly compromised. The peel performance is comparable or even clearly better as demonstrated by IE3 vs CE2.

## Claims

1. A method for making a water-based adhesive composition, comprising:
dispersing at least one unsaturated monomer in an aqueous medium to form an emulsified mixture;
introducing at least one initiator to the emulsified mixture, thereby polymerizing the at least one unsaturated monomer and forming an emulsion polymer;
introducing oxidation-reduction initiator to the emulsion polymer after all of the at least one unsaturated monomer is fed to the emulsified polymer, in order to reduce monomer residue level;
introducing at least one polyol ester of conjugated acid to the emulsion polymer upon completion of polymerization of the at least one unsaturated monomer, thereby forming the adhesive composition; and
further introducing additional oxidation-reduction initiator to the emulsion polymer after all of the polyol ester is fed to the emulsified mixture;
wherein the at least one polyol ester of a conjugated acid is tung oil;
wherein the oxidation-reduction initiator consists of at least one inorganic reducing agent and of an inorganic or organic oxidizing agent; wherein the oxidation component comprises ammonium salts and alkali metal salts of peroxodisulfuric acid, hydrogen peroxide, or organic peroxides; and wherein the reduction component comprises alkali metal salts of sulfurous acid, alkali metal salts of disulfurous acid, bisulfite addition compounds with aliphatic aldehydes and ketones, or hydroxymethanesulfinic acid and its salts, or ascorbic acid.

2. The method of claim 1, wherein the at least one polyol ester of a conjugated acid comprises from 0.01 to 5 percent by weight of the adhesive composition.

3. The method of claim 1, wherein the at least one unsaturated monomer is selected from the group consisting of 2-ethylhexyl acrylate, ethyl acrylate, butyl acrylate, methyl (meth)acrylate, acrylic acid, and mixtures of two or more thereof.

4. The method of claim 1, further comprising introducing to the emulsion polymer at least one additive selected from the group consisting of a thickener, a neutralizing agent, a plasticizer, a tackifier, an adhesion promoter, and combinations of two or more thereof.

5. A water-based pressure sensitive adhesive comprising the composition prepared according to claim 1.

## Patentansprüche

1. Verfahren zum Herstellen einer Klebstoffzusammensetzung auf Wasserbasis, umfassend:
Dispergieren mindestens eines ungesättigten Monomers in einem wässrigen Medium, um eine emulgierte Mischung auszubilden;
Einführen mindestens eines Initiators zu der emulgierten Mischung, wodurch das mindestens eine ungesättigte Monomer polymerisiert und ein Emulsionspolymer ausgebildet wird;
Einführen des Oxidationsreduktionsinitiators zu dem Emulsionspolymer, nachdem das gesamte des mindestens einen ungesättigten Monomers dem emulgierten Polymer zugeführt wird, um den Monomerrückstandsgehalt zu reduzieren;
Einführen mindestens eines Polyolesters konjugierter Säure zu dem Emulsionspolymer nach Beendigung der Polymerisation des mindestens einen ungesättigten Monomers, wodurch die Klebstoffzusammensetzung ausgebildet wird; und
ferner Einführen eines zusätzlichen Oxidationsreduktionsinitiators zu dem Emulsionspolymer, nachdem der gesamte des Polyolesters der emulgierten Mischung zugeführt wird;
wobei der mindestens eine Polyolester einer konjugierten Säure Tungöl ist;
wobei der Oxidationsreduktionsinitiator aus mindestens einem anorganischen Reduktionsmittel und einem anorganischen oder organischen Oxidationsmittel besteht; wobei die Oxidationskomponente Ammoniumsalze und Alkalimetallsalze von Peroxodischwefelsäure, Wasserstoffperoxid oder organische Peroxide umfasst; und wobei die Reduktionskomponente Alkalimetallsalze von schwefeliger Säure, Alkalimetallsalze von dischwefeliger Säure,
Bisulfitadditionsverbindungen mit aliphatischen Aldehyden und Ketonen oder Hydroxymethansulfinsäure und ihre Salze oder Ascorbinsäure umfasst.

2. Verfahren nach Anspruch 1, wobei der mindestens eine Polyolester einer konjugierten Säure von zu 0,01 bis 5 Gewichtsprozent die Klebstoffzusammensetzung umfasst.

3. Verfahren nach Anspruch 1, wobei das mindestens eine ungesättigte Monomer aus der Gruppe ausgewählt ist, bestehend aus 2-Ethylhexylacrylat, Ethylacrylat, Butylacrylat, Methyl(meth)acrylat, Acrylsäure und Mischungen aus zwei oder mehr davon.

4. Verfahren nach Anspruch 1, ferner umfassend das Einführen mindestens eines Additivs, das aus der Gruppe ausgewählt ist, bestehend aus einem Verdickungsmittel, einem Neutralisationsmittel, einem Weichmacher, einem Klebrigmacher, einem Haftvermittler und Kombinationen von zwei oder mehr davon, zu dem Emulsionspolymer.

5. Haftklebstoff auf Wasserbasis, umfassend die Zusammensetzung, die nach Anspruch 1 vorbereitet wird.

## Revendications

1. Procédé de préparation d'une composition d'adhésif à base aqueuse, comprenant :
la dispersion d'au moins un monomère insaturé dans un milieu aqueux pour former un mélange émulsifié ;
l'introduction d'au moins un initiateur au mélange émulsifié, permettant ainsi de polymériser l'au moins un monomère insaturé et de former un polymère en émulsion ;
l'introduction d'un initiateur d'oxydation-réduction dans le polymère en émulsion après que la totalité de l'au moins un monomère insaturé a été introduite dans le polymère émulsifié, afin de réduire le niveau de résidu de monomère ;
l'introduction d'au moins un ester de polyol d'acide conjugué dans le polymère en émulsion à la fin de la polymérisation de l'au moins un monomère insaturé, permettant ainsi de former la composition d'adhésif ; et
l'introduction supplémentaire d'initiateur d'oxydation-réduction dans le polymère d'émulsion après que la totalité de l'ester de polyol a été introduite dans le mélange émulsifié ;
dans lequel l'au moins un ester de polyol d'un acide conjugué est l'huile de tung ;
dans lequel l'initiateur d'oxydation-réduction est constitué d'au moins un agent réducteur inorganique et d'un agent oxydant inorganique ou organique ; dans lequel le composant d'oxydation comprend des sels d'ammonium et des sels de métal alcalin d'acide peroxodisulfurique, du peroxyde d'hydrogène, ou des peroxydes organiques ; et dans lequel le composant de réduction comprend des sels de métal alcalin d'acide sulfureux, des sels de métal alcalin d'acide disulfureux, des composés d'addition de bisulfite avec des aldéhydes et cétones aliphatiques, ou de l'acide hydroxyméthanesulfinique et ses sels, ou de l'acide ascorbique.

2. Procédé selon la revendication 1, dans lequel l'au moins un ester de polyol d'un acide conjugué comprend de 0,01 à 5 pour cent en poids de la composition d'adhésif.

3. Procédé selon la revendication 1, dans lequel l'au moins un monomère insaturé est choisi dans le groupe constitué d'acrylate de 2-éthylhexyle, d'acrylate d'éthyle, d'acrylate de butyle, de (méth)acrylate de méthyle, d'acide acrylique, et de mélanges de deux de ceux-ci ou plus.

4. Procédé selon la revendication 1, comprenant en outre l'introduction dans le polymère en émulsion d'au moins un additif choisi dans le groupe constitué d'un épaississant, d'un agent neutralisant, d'un plastifiant, d'un agent poisseux, d'un promoteur d'adhérence, et de combinaisons de deux de ceux-ci ou plus.

5. Adhésif sensible à la pression à base aqueuse comprenant la composition préparée selon la revendication 1.
